# EUROPEAN PATENT SPECIFICATION

(11) **EP 0 399 131 B1**
(45) Date of publication and mention of the grant of the patent: **29.12.1993**
(21) Application number: 89830235.1
(22) Date of filing: 25.05.1989
(51) Int. Cl.: H02K 57/00, H02K 31/00, H02K 53/00

(54) **Electric motor whose poles are set according to the direction of the axis without commutator parts, and magnetic motor based on the same principle**
Elektrischer Motor ohne Stromwenderteile mit in der Richtung der Achse aufgestellten Polen und auf demselben Prinzip basierender magnetischer Motor
Moteur électrique sans parties de collecteur et dont les pôles sont disposés suivant la direction de l'axe, et moteur magnétique basé sur le même principe

(43) Date of publication of application: 28.11.1990
(73) Proprietor: Karoschitz, Giorgio, I-84100 Salerno (IT)
(72) Inventor: Karoschitz, Giorgio, I-84100 Salerno (IT)
(74) Representative: Lecce, Giovanni

(56) References cited:
- FR-A- 922 795
- FR-A- 929 030
- FR-A- 1 270 038
- GB-A- 917 263
- US-A- 2 374 998

## Description

Among direct current machines, especially, the first class is that of dynamos, consisting in an inductor field where induced coils are made to revolve carried by the so-called armature where an E.M.F. is generated, while the field generally is given by a pair of poles, which can eventually be replaced by permanent magnets or by electro-magnets. The inductive field of an elementary dynamo consists in a pair of fixed poles which make up the inductor part; the armature is made to revolve within the field of the poles of the latter. The armature may be represented as a cylinder the generatrixes of which are constituted by conductor insulated and connected to each other, in order to sum up the E.M.F. which is generated in them during the rotation imparted to the aforementioned armature in the inductor field.

The lines of force coming out of the pole 'N' and entering the pole 'S' are cut during rotation of the armature by the stretches of conductors set along the generatrixes. At every half-turn, the E.M.F. being developed in a conductor changes its polarity; an elementary coil made to revolve in the field offers no flux variation if the plane of the said coil is perpendicular to the axis of the poles; in the latter part of the rotation, however, the useful stretches of the coil cut the aforementioned lines of force. Flux variation is at a peak when the plane of the spiral is parallel to the axis of the poles.

Beyond this position the coil presents the preceding variations once again, but in the opposite sense: hence the E.M.F changes its polarity and goes back through zero when the coil returns to normal pole axis position. In order to make the induced current in the coil pass to the outside circuit in a direction which always stays the same, it becomes necessary at every half-turn to invert the connection of the ends of the outside circuit to the ends of the coil.

The part carrying out this inversion is called a commutator.

In the present state of technology, this part is needed for direct current machines built on the basis of a dynamo reversibility principle (that is, on the transformation of electrical energy into mechanical energy). The commutator calls for special manufacture and is delicate to run, and this is a problem of considerable importance when supply voltage and machine power increase, and among other things, it requires appropriate corrections on the air gap in order to work regularly. A prior art homopolar machine is disclosed in GB-A-917263.

The present invention has the purpose of overcoming the said drawbacks by realizing a homopolar field electric machine not needing commutator parts. According to the present invention this object is achieved by an electric motor comprising in combination:
- a generally cylindrically shaped stator-induced part of a predetermined outer stator diameter, having a central opening defining a central axis in said opening;
- a generally cylindrically shaped rotor-inductor part having a core and having a prearranged outer rotor diameter smaller than said predetermined outer stator diameter, being rotatably disposed along said central axis at least one air gap being formed in series between said stator-induced part and said rotor-inductor part;
- the stator-induced part having a plurality of throughgoing and generally cylindrical grooves, each defining a groove axis generally parallel with said central axis, and
- a plurality of armature elements housed in said plurality of grooves, respectively, each element having a cylindroid or cylindrical core of ferromagnetic material and carrying a winding part, each winding part operatively carrying a current, a plurality of said winding parts constituting a stator winding, whereby said rotor is operably rotatable within said stator.

The advantages deriving from the electric motor of the present invention refer in the first place to a considerable structural simplification of the whole, to the absence of sparking which can easily cause radio-disturbance type interference, to the almost total absence of maintenance.

These, as well as further specific features of the invention, will appear more clearly from the following detailed description of preferable ways of putting into effect of the invention, referring to the enclosed drawing charts where:
- figures 1 and 2: schematically show, respectively in transversal cross-section and from a front view, the electric motor with a tandem layout of the poles;
- Figures 1a and 2a: schematically show, respectively in transversal cross-section and from a front view, a totally magnetic variation of the motor which calls for the use of permanent magnets for the inductor and for the armature;
- figure 3: schematically shows the on-torus winding system for the case of an electric motor;
- figure 3a: schematically shows a teroid with permanent integral magnets.

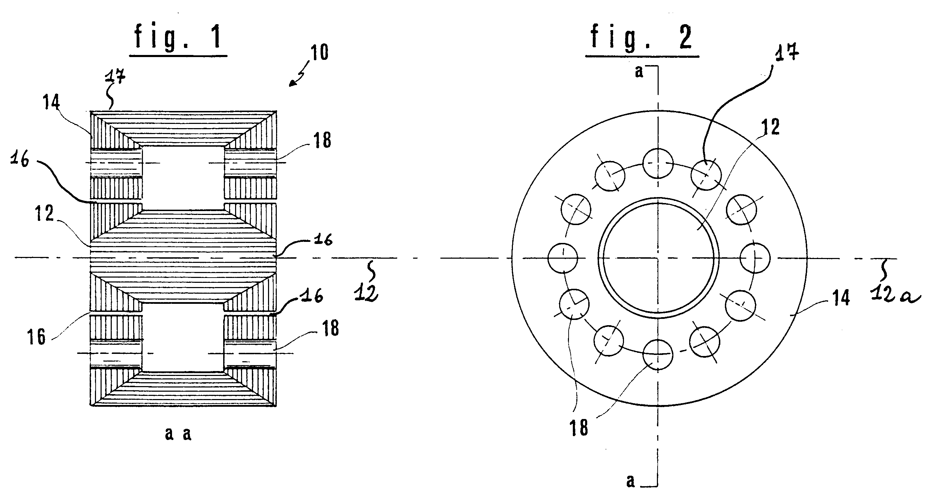

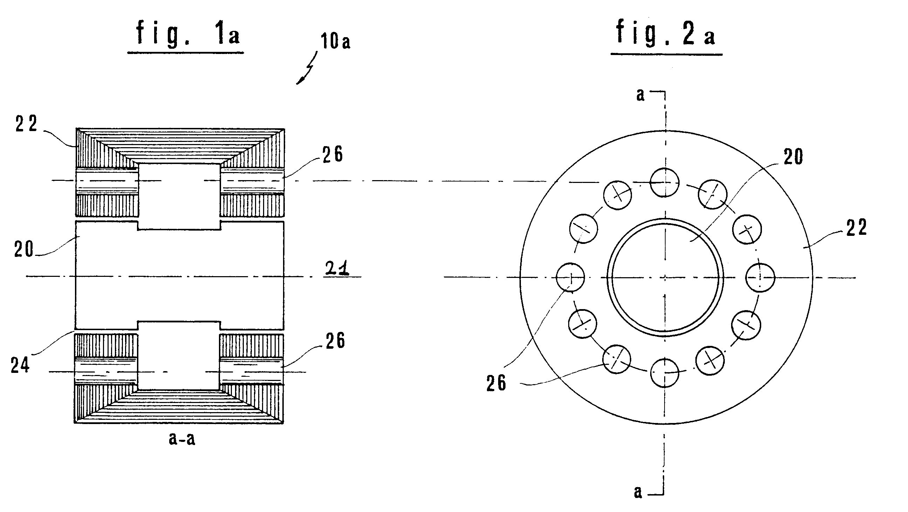

Referring to figures 1 and 2 the machine, indicated as a whole by (10), turns out to consist of a generally cylindrical shaped rotor-inductor part (12), which has a prearranged outer diameter, and a stator-induced part (14) having a predetermined outer stator diameter, and wherein the rotor diameter is smaller than the stator diameter. The stator (14) has a central opening defining a central axis (12a), and the rotor (12) inductor part is rotatably disposed along the central axis (12a).

It is a basic feature of the invention that the magnetic flux in the rotor-inductor part (12) extends axially from one pole (13) to the other pole (15), emerging radially from one rotor-inductor pole along the whole corresponding circular peripheral extension, and returning at the other pole in the same way. Through the air gap (16), the magnetic flux enters into the armature and its electric circuits; then, curving around axially in a generally coaxial cylindrical shape along the machine (10) and curving around again at right angles to the axis, it reaches the other pole after having interacted with the corresponding electric circuit of the rotor (12). The rotor inductor part (12) can be made with a full core or with a pack or plurality of sheets whose rolling plane is parallel to the direction of the magnetic flux, i.e. substantially concentric with the central axis (12a).

In the main body, one example of manufacture calls for a sheet wound concentrically around the axis of the machine and for polar terminations made of packs of juxtaposed circular sheets, with a rolling plane perpendicular to the generatrix of the main body and joined to it after conical milling. The winding of the inductor can be located in various ways (in a solenoid shape along the main body, in skeins alog the side surface of the pole, etc.), but in the end it must create a magnetic flux which, while axial in the main body, opens up radially when coinciding with the pole shoes of the armature.

This magnetic inductor flux can also be started by a permanent magnet fixed to the rotor, as will be described later; in this case, the slip ring with its brushes is abolished.

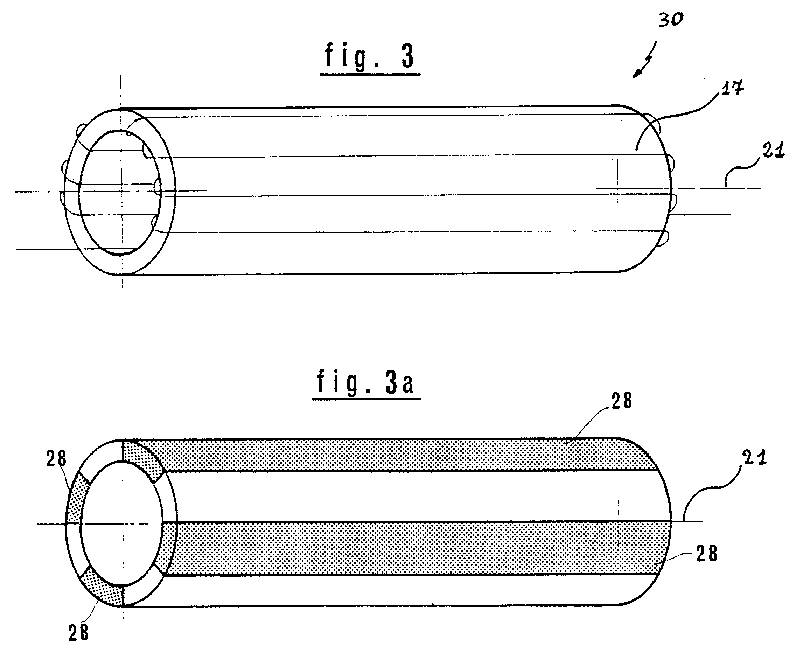

The stator (14) is made of a pack or a plurality of sheets whose rolling plane is parallel to the direction of magnetic flux; the stator core is substantially concentric with the center axis (12a); one example of manufacture calls for a wound sheet on the main body, concentric to the axis of the machine, and packs of juxtaposed circular discs (with a rolling plane perpendicular to the generatrix of the main body, and connected to the same after conical milling) coinciding with the polar terminations of the inductor. In each pack of juxtaposed discs there are formed a plurality of through-going and substantially cylindrical grooves (18) parallel to the central axis (12a) which house the armature; winding elements are cut around it in a circle. The cylindrical grooves, viewed in cross-section, or in an end view on a plane perpendicular to the central axis (12a), appear substantially as circles and are substantially equispaced from one another. The armature winding is made up of several elements, each of which consists of a circuit wound on a core of ferro-magnetic material having a cylindroid or cylindrical shape (30), as on figure 3, according to the direction of its generatrix.

These parts, housed in the grooves (18), encircle in the stator (14) and coincide with the pole shoe; each cylindroid on which the electric circuit which is part of the armature winding is wound, can also be replaced by a double ring of concentric holes parallel to the axis of the machine, and aligned with one another along an axial direction cut out of the packs of juxtaposed discs in which the winding itself is woven; the above-identified parts can be easily connected to each other or separated from one another, modifying almost continuously the shape of the armature winding, and hence conferring on the machine a wide range of possibilities of dynamic alteration, both at a standstill and while running. The electric supply direction of the winding parts of the armature which are at one pole is opposite to that of the parts at the heteronymous pole. Running takes place by interaction of the magnetic inductor flux with the circuit parts which make up the armature winding (17), each one of which, as has been said, includes an on-torus winding; this interaction causes a revolving movement in the inductor field and hence makes the rotor itself turn.

In fact, a magnetic field set within a torus, placed in a uniform magnetic field, with its axis normally disposed to the lines of the uniform field, undergoes a translation in a direction normal to the plane identified by the two above-mentioned directions.

Figures 1a and 2a refer to a totally magnetic variety of the machine which in this example, as will be shown later, calls for use of permanent magnets fixed to the rotor which create an axial magnetic inductor field from one pole to the other, as in the preceding instance, and of permanent magnets, of an appropriate shape, fixed to the stator which, interacting with the above, cause the rotor to revolve.

Application examples of the motor, when of this version, can be numerous and interesting: for example, small mechanical systems such as servomechanisms, electric household appliances, toys, etc. which can be made to operate without calling for any outside supply.

Referring to figures 1a and 2a the machine, using similar terms for corresponding similar items, shown as a whole as (10A), consists of a rotor inductor part (20) defining a central axis (21) and a stator part (22), according to the traditional terminology for electric motors. The magnetic inductor field, created by one or more permanent magnets, integral with the rotor inductor part (20), runs axially from one pole to the other, the latter being set in tandem or series according to the direction of the axis; the said field, emerging from one pole in radial direction throughout the circular development, after having gone through the air gap (24) (Fig. 1a), enters the stator (22) where it comes into contact with the magnetic armature elements. Then, bending axially in a cylindrical shape coaxial with the central axis (21) of the machine and then bending again in a direction radial to that of the axis, it coincides with the other pole re-entering the rotor inductor part (20) after having inter-acted with the corresponding magnetic stator parts.

These consist each of a permanently magnetized toroid, whose axis is set parallel to that of the machine, and these parts are laid out in a crown in the stator (22) coinciding with the inductor poles.

The aforementioned stator is made of a pack of sheets, whose rolling plane is parallel to the direction of magnetic flux.

A preferable method of manufacture calls for wound sheet for the main body and packs of juxtaposed circular discs (with a rolling plane perpendicular to that of the generatrix of the main body and joined to the same after conical milling) coinciding with the polar terminators of the rotor. The grooves (26) parallel to the axis which house the magnetic stator parts are set in each pack of juxtaposed discs. The rotor inductor part (20) can be made either with a full core or of sheet pack with a rolling plane parallel to the direction of magnetic flux. By way of example, the main body can be obtained by concentric winding of sheet, while the polar terminations can consist in packs of juxtaposed circular sheets having a rolling plane perpendicular to the generatrix of the aforementioned main body. Coupling of the latter to each pole shoe is effected after previous conical milling of the parts to be united.

In this embodiment, the machine works because of interaction of the magnetic inductor flux with the magnetic elements of the armature; this interaction gives rise to a revolving movement of the inductor field and therefore of the rotor inductor part itself. In fact, as in the case described above, a magnetic field, set within a torus,placed in a uniform magnetic field with its axis normally disposed to the lines of the uniform field, is subject to forces which have a translating element in a direction normal to the plane identified by the two directions described above.

As can be seen, the advantages deriving from the invention are obvious, referring in the first place to the elimination of the commutator which allows for considerable simplification of the whole, while keeping up high standards of electric and mechanical performances; elimination of commutation furthermore means elimination of interference, while motor maintenance is virtually reduced to nil.

Regarding the totally magnetic variety, further advantages stem from the elimination of any risk whatsoever during use of the motor, due to absence of outside supply sources.

## Claims

1. An electric motor comprising in combination:
- a generally cylindrically shaped stator-induced part (14) of a predetermined outer stator diameter, having a central opening defining a central axis (12a) in said opening;
- a generally cylindrically shaped rotor-inductor part (12) having a core and having a prearranged outer rotor diameter smaller than said predetermined outer stator diameter, being rotatably disposed along said central axis (12a) at least one air gap (16) being formed in series between said stator-induced part (14) and said rotor-inductor part (12);
- the stator-induced part (14) having a plurality of throughgoing and generally cylindrical grooves (18), each defining a groove axis generally parallel with said central axis (12a), and
- a plurality of armature elements housed in said plurality of grooves (18), respectively, each element having a cylindroid or cylindrical core (30) of ferromagnetic material and carrying a winding part, each winding part operatively carrying a current, a plurality of said winding parts constituting a stator winding, whereby said rotor (12) is operably rotatable within said stator (14).

2. The electric motor according to claim 1, wherein said cylindrical grooves (18), viewed in cross-section, or in an end view on a plane perpendicular to said central axis (12a), appear substantially as circles, and are substantially equispaced from one another.

3. The electric motor according to claim 1 or 2, wherein said currents carried by respective winding parts of said armature, operatively give rise to a magnetic toroidal field inside each cylindrical core.

4. The electric motor according to any one of the preceding claims, wherein said rotor and stator windings are connectable to a direct current supply.

5. The electric motor according to any one of the preceding claims from 1 to 3, wherein said rotor and stator windings are connectable to an alternating current supply.

6. The electric motor according to any one of the preceding claims, wherein the core of the rotor (12) is a full core. or a plurality of sheets having the rolling plane parallel to the direction of the magnetic flux.

7. The electric motor according to any one of the preceding claims, wherein the core of the stator (14) includes a plurality of sheets substantially concentric with the central axis (12a).

8. The electric motor according to any one of the preceding claims from 1 to 6, wherein the core of the stator (14) includes a plurality of substantially circular discs substantially concentric with said central axis (12a), said discs being located in respective juxtaposed planes substantially perpendicular to said central axis (12a).

9. The electric motor according to claim 8, wherein the stator includes the dircular discs, each disc being formed with holes corresponding to respective of said grooves, said discs being aligned with one another along an axial direction.

10. The electric motor according to anyone of the preceding claims wherein at least one of the armature elements is substituted by permanent magnets, the permanent magnets being disposed in said plurality of grooves (18), respectively, whereby said rotor (12) is operably rotatable within said stator (14).

## Patentansprüche

1. Elektromotor, **gekennzeichnet** durch die Kombination folgender Merkmale:
- einen im wesentlichen zylindrischen Statorfeldteil (14) mit vorbestimmtem äußeren Statordurchmesser und einer zentralen Bohrung, welche eine Mittelachse (12a) in dieser Bohrung bestimmt;
- einen im wesentlichen zylindrischen, drehbar auf der Mittelachse (12a) angeordneten Rotorerregerteil (12) mit einem Kern und einem vorbestimmten äußeren Rotordurchmesser, der kleiner ist als der vorbestimmte äußere Statordurchmesser, wobei in Reihe zwischen dem Statorfeidteil (14) und dem Rotorerregerteil (12) wenigstens ein Luftspalt gebildet ist;
- eine Vielzahl durchgehender und im wesentlichen zylindrischer Nuten (18) im Statorfeldteil (14), deren jede eine Nutenachse bestimmt, welche im wesentlichen parallel zu der Mittelachse (12a) liegt, und
- eine Vielzahl von Ankerelementen, die jeweils einzeln in einer der Nuten (18) aufgenommen sind und einen zylinderartigen oder zylindrischen Kern (30) aus ferromagnetischem Material haben, der einen Wicklungsteil trägt, welcher im Betriebszustand jeweils einen Strom führt, wobei eine Vielzahl dieser Wicklungsteile eine Statorwicklung bildet, wodurch der Rotor (12) in dem Stator (14) rotierend betreibbar ist.

2. Elektromotor nach Anspruch 1, **dadurch gekennzeichnet**, daß die zylindrischen Nuten (18) im Querschnitt oder in einer Stirnansicht in einer senkrecht zur Mittelachse (12a) liegenden Ebene im wesentlichen als Kreise erscheinen und im wesentlichen denselben Zwischenabstand voneinander haben.

3. Elektromotor nach Anspruch 1 oder 2, **dadurch gekennzeichnet**, daß die in den jeweiligen Windungsteilen der Ankerelemente fließenden Ströme im Betriebszustand ein toroidförmiges magnetisches Feld in jedem zylindrischen Kern entstehen lassen.

4. Elektromotor nach einem der vorhergehenden Ansprüche, **dadurch gekennzeichnet**, daß der Rotor und die Statorwindungen an eine Gleichstromversorgung anschließbar sind.

5. Elektromotor nach einem der Ansprüche 1 bis 3, **dadurch gekennzeichnet**, daß der Rotor und die Statorwindungen an eine Wechselstromversorgung anschließbar sind.

6. Elektromotor nach einem der vorhergehenden Ansprüche, **dadurch gekennzeichnet**, daß der Kern des Rotors (12) ein massiver Kern ist oder aus einer Vielzahl von Blechen besteht, deren Walzebene parallel zur Richtung des magnetischen Flusses liegt.

7. Elektromotor nach einem der vorhergehenden Ansprüche, **dadurch gekennzeichnet**, daß der Kern des Stators (14) eine Vielzahl im wesentlichen zur Mittelachse (12a) konzentrischer Bleche aufweist.

8. Elektromotor nach einem der Ansprüche 1 bis 6, **dadurch gekennzeichnet**, daß der Kern des Stators (14) eine Vielzahl im wesentlichen runder Scheiben aufweist, die im wesentlichen konsentrisch zur Mittelachse (12a) liegen und in nebeneinanderliegenden Ebenen angeordnet sind, welche im wesentlichen senkrecht zur Mittelachse (12a) liegen.

9. Elektromotor nach Anspruch 8, **dadurch gekennzeichnet**, daß der Stator runde Scheiben aufweist, deren jede mit Löchern ausgebildet ist, welche den jeweiligen Nuten entsprechen, wobei die Scheiben in axialer Richtung miteinander ausgerichtet sind.

10. Elektromotor nach einem der vorhergehenden Ansprüche, **dadurch gekennzeichnet**, daß wenigstens eines der Ankerelemente durch Permanentmagnete ersetzt ist, wobei die Permanentmagnete jeweils in den Nuten (18) angeordnet sind, wodurch der Rotor (12) in dem Stator (14) rotierend betreibbar ist.

## Revendications

1. Moteur électrique comprenant conjointement :
- une partie statorique d'induit (14) de forme généralement cylindrique d'un diamètre de stator externe prédéterminé, comportant une ouverture centrale définissant un axe central (12a) dans ladite ouverture;
- une partie rotorique d'induction (12) de forme généralement cylindrique comportant un noyau et présentant un diamètre de rotor externe prédéterminé plus petit que ledit diamètre de stator externe prédéterminé, étant disposé à rotation le long dudit axe central (12a) au moins un entrefer (16) étant formé en série entre ladite partie statorique d'induit (14) et ladite partie rotorique d'induction (12);
- la partie statorique d'induit (14) comportant une pluralité de rainures traversantes et généralement cylindriques (18), chacune définissant un axe de rainure généralement parallèle audit axe central (12a), et
- une pluralité d'éléments d'armature logés dans ladite pluralité de rainures (18), respectivement, chaque élément comportant un noyau (30) cylindrique ou en forme de cylindre elliptique de matériau ferromagnétique et supportant une partie d'enroulement, chaque partie d'enroulement supportant fonctionnellement un courant, une pluralité desdites parties d'enroulement constituant un enroulement de stator, de manière que ledit rotor (12) soit fonctionnellement tourné au sein dudit stator (14).

2. Moteur électrique selon la revendication 1, dans lequel lesdites rainures cylindriques (18), vues en section transversales, ou vues depuis une extrémité sur un plan perpendiculaire audit axe central (12a), apparaissent sensiblement comme des cercles, et sont sensiblement équidistantes.

3. Moteur électrique selon la revendication 1 ou 2, dans lequel lesdits courants supportés par les parties d'enroulement respectives de ladite armature, donnent fonctionnellement naissance à un champ toroïdal magnétique au sein de chaque noyau cylindrique.

4. Moteur électrique selon l'une quelconque des revendications précédentes, dans lequel lesdits enroulements de rotor et de stator peuvent être reliés à une source de courant continu.

5. Moteur électrique selon l'une quelconque des revendications précédentes 1 à 3, dans lequel lesdits enroulements de rotor et de stator peuvent être reliés à une source de courant alternatif.

6. Moteur électrique selon l'une quelconque des revendications précédentes, dans lequel le noyau du rotor (12) est un noyau plein, ou consiste en une pluralité de feuilles dont le plan d'enroulement est parallèle à la direction du flux magnétique.

7. Moteur électrique selon l'une quelconque des revendications précédentes, dans lequel le noyau du stator (14) comprend une pluralité de feuilles sensiblement concentriques relativement à l'axe central (12a).

8. Moteur électrique selon l'une quelconque des revendications 1 à 6, dans lequel le noyau du stator (14) comprend une pluralité de disques sensiblement circulaires sensiblement concentriques relativement audit axe central (12a), lesdits disques étant situés dans des plans juxtaposés respectifs sensiblement perpendiculaires audit axe central (12a).

9. Moteur électrique selon la revendication 8, dans lequel le stator comprend les disques circulaires, chaque disque étant doté de trous correspondant auxdites rainures respectives, lesdits disques étant alignés le long d'une direction axiale.

10. Moteur électrique selon l'une quelconque des revendications précédentes, dans lequel au moins un des éléments d'armature est remplacé par des aimants permanents, les aimants permanents étant disposés dans ladite pluralité de rainures (18), respectivement, de manière que ledit rotor (12) soit fonctionnellement tourné au sein dudit stator (14).
